Europäisches Patentamt

European Patent Office

Office européen des brevets

(19)

(11) Veröffentlichungsnummer: **0 406 461 B1**

# EUROPÄISCHE PATENTSCHRIFT

(45) Veröffentlichungstag der Patentschrift: **05.01.94**

(51) Int. Cl.5: **C08F 220/14**, D21H 17/44

(21) Anmeldenummer: **89112252.5**

(22) Anmeldetag: **05.07.89**

(54) **Neue kationische Dispergiermittel enthaltende Papierleimungsmittel.**

(43) Veröffentlichungstag der Anmeldung:
**09.01.91 Patentblatt 91/02**

(45) Bekanntmachung des Hinweises auf die Patenterteilung:
**05.01.94 Patentblatt 94/01**

(84) Benannte Vertragsstaaten:
**AT BE CH DE ES FR GB GR IT LI NL SE**

(56) Entgegenhaltungen:
**DE-A- 2 709 981**
**DE-A- 3 737 615**
**DE-A- 3 826 825**

(73) Patentinhaber: **Giulini Chemie GmbH**
**Giulinistrasse 2**
**Postfach 150 480**
**D-67029 Ludwigshafen(DE)**

(72) Erfinder: **Bung, Josef**
**Albert-Schweitzer-Strasse 40**
**D-6701 Dannstadt 1(DE)**
Erfinder: **Ulubay, Hasan, Dr.**
**Heckenrotstrasse 5**
**D-6701 Dannstadt-Schauernheim(DE)**
Erfinder: **Schutzius, Bernd**
**Hardenburgstrassse 2**
**D-6725 Römerberg 2(DE)**

**Beschreibung**

Gegenstand der vorliegenden Erfindung sind kationische Dispergiermittel für die Dispergierung von Leimungsmitteln, z.B. von Kolophonium und/oder Derivaten und Reaktivleimungsmitteln, z.B. Alklylketendimeren, ferner kationische Leimungsmitteldispersionen, die diese Dispergiermittel und gegebenenfalls auch Aluminiumsulfat enthalten. Ferner betrifft die Erfindung die Herstellung der neuen Dispergiermittel und der damit hergestellten Leimungsmitteldispersionen, die mit Vorteil in der Papierleimung verwendet werden.

Wässerige Harzdispersionen für die Papierleimung sind schon seit langem bekannt.

Harzdispersionen auf der Grundlage von Naturharzen, z. B. Kolophoniumharzen, die als Stabilisator bzw. als Schutzkolloid alkalisch verkleisterte Stärke, Methylcellulose, Kasein oder andere Proteine enthalten, sind in zahlreichen Schutzrechten beschrieben, z. B. werden sie in der DE PS 11 31 348 und der US PS 3 966 654 erwähnt. Diese Schutzkolloide werden auch bei der Herstellung der sog Bewoid-Leime eingesetzt.

Bekannt sind auch kationische Dispersionen von Papierleimungsmitteln in Wasser, in denen als kationenaktive Stoffe meistens kationische Stärken oder kationische, synthetisch hergestellte Polymere eingesetzt werden. Durch die Anwesenheit der kationenaktiven Stoffe wird der Leimungsvorgang erheblich beschleunigt.

In der US-PS 39 66 654 werden wässerige Dispersionen von Papierleimungsmitteln in Wasser beschrieben, die aus 5 bis 50 Gew.% eines verstärkten Harzes 0,5 bis 10 Gew.% eines wasserlöslichen kationischen Dispergiermittels und Wasser bestehen. Als verstärkte Harze werden hierbei vor allem Balsam - und Tallharze verwendet, die mit Verbindungen, welche die Gruppe $>C = C - C = 0$ enthalten, umgesetzt worden sind. Die kationischen Dispergiermittel können Polyamid-Epichlorhydrinharze, Alkylenpolyamin-Epichlorhydrinharze oder Polydiallylamin-Epichlorhydrinharze sein. Nachteile dieser Dispersionen werden darin gesehen, daß ihre Lagerungsbeständigkeit noch zu wünschen übrig läßt.

Wässerige Dispersionen von feinverteilten und verstärkten Harzleimen sind Gegenstand der EU-A1 0 056 876. Anstelle der in der US-PS 39 66 654 beschriebenen Dispergiermittel werden jedoch kationische Stärken als wasserlösliche Dispergiermittel eingesetzt. Außerdem enthalten sie noch ein anionisches oberflächenaktives Mittel. Der Rest der Dispersion besteht aus Wasser. Die zur Papierleimung eingesetzten Dispersionen können entweder durch Homogenisierung einer Lösung oder Schmelze des verstärkten Harzes in einem Homogenisator unter Druck oder nach dem sog. Inversionsprozeß erzeugt werden. Bei dem zuerst genanntem Prozeß wird das verstärkte Harz zunächst in einem mit Wasser nicht mischbaren organischem Lösungsmittel gelöst. Anschließend wird in der Lösung die wässerige Lösung eines kationischen Dispergiermittels und anionischen oberflächenaktiven Mittels dispergiert. Durch Homogenisierung in einem Homogenisator bei Drücken von 50 bis 400 bar entsteht aus der instabilen Emulsion eine stabile Emulsion. Abschließend wird das org. Lösungsmittel durch Vakuumdestillation entfernt.

Papierleimungsmittel auf Basis von Kolophonium-Dispersionen sind weiterhin beschrieben in der EU-A1 0 200 002. Sie enthalten neben dem Kolophonium, das mit Maleinsäureanhydrid oder Fumarsäure modifiziert sein kann oder ein modifiziertes Kohlenwasserstoffharz ist, die handelsüblichen Schutzkolloide oder oberflächenaktive Substanzen, Polyaluminiumhydroxychloride und gegebenenfalls Retentions- und/oder Fixierungsmittel und/oder Naßfestmittel. Wegen ihrer geringen Elektrolytstabilität neigen diese Dispersionen zur Phasentrennung bzw. zur Verdickung.

In der DE-OS 37 37 615 wird eine Harzemulsionsschlichte beschrieben, die ein verstärktes Harz und ein wenigstens teilweise quarternisiertes Copolymer, das in der Hauptsache aus einem Monomer eines (Meth)Acrylsäurealkylaminoalkylesters oder -amids und Wasser besteht, enthält. Ein Vorteil dieser Schlichte soll darin bestehen, daß sie bei höherem pH-Wert, bei höherer Wasserhärte und bei höherer Temperatur d.h. unter Bedingungen, in denen gewöhnliche Schlichten auf anionischer Basis nicht mehr wirksam leimen, eine gute Schlichtewirkung aufweist. Dieses Leimungsmittel ist mit sauren Aluminiumsalzen jedoch unverträglich.

Der Erfindung lag daher die Aufgabe zugrunde, stabile Leimungsmitteldispersionen zur Leimung im neutralen und schwach alkalischen Gebiet zu finden, die sowohl für die Masse- als auch für die Oberflächenleimung geeignet sind und außerdem mit Aluminiumsulfat gut verträglich sind und unter Verzicht auf aufwendige Rühraggregate und Apparaturen ökonomisch herstellbar sind.

Die gestellte Aufgabe konnte überraschenderweise mit neuen Leimungsmitteldispersionen gelöst werden, die ein neues kationisches Dispergiermittel, vorzugsweise in Form eines wässerig-kolloidalen Polymersalzes enthalten, welches aus den Monomeren a.) bis f.) nach Anspruch 1 erhältlich ist.

Das kationische Dispergiermittel, das das Kolophonium und/oder seine Derivate oder das Alkylketendimer dispergiert, ist ein Copolymer das gegebenenfalls auch allein als Leimungsmittel fungieren kann. Wir verweisen in diesem Zusammenhang auf unsere nicht veröffentlichte deutsche Anmeldung P 38 26 825.6-45.

Das kationische Dispergiermittel ist aus den Monomeren a) bis f) erhältlich :

a.) 10 bis 30 Gew. % N'N-Dimethylaminoethylacrylat und oder -methacrylat

b.) 5 bis 30 Gew. % Methacrylsäureester und/oder Acrylsäureester eines $C_{10}$ bis $C_{22}$ Fettalkohols

c.) 10 bis 60 Gew. % Methylacrylat und/oder -methacrylat

d.) 0 bis 60 Gew. % Butylacrylat und/oder -methacrylat

e.) 0 bis 60 Gew. % i-Butylacrylat und/oder -methacrylat

f.) 3 bis 15 Gew. % Methacrylsäure und/oder Acrylsäure,

wobei die Summe der Komponenten a.) bis f.) stets 100 % beträgt.

Das kationische Dispergiermittel kann auch als Polymersalz in Form einer wässrig kolloidalen Lösung vorliegen. In dieser Form wird es bevorzugt zur Herstellung der Leimungsmitteldispersionen eingesetzt.

Der Stickstoffgehalt des Copolymeren beträgt 100 bis 250 mMol pro 100 g der Gewichtssumme der Monomeren a.) bis f.). Das Salz des Copolymeren kann sowohl das Salz einer anorganischen, als auch einer organischen Säure sein. Salz Saure, Ameisensäure und Essigsäure sind zur Salzbildung besonders geeignet.

Das neue kationische Dispergiermittel ist durch eine radikalisch initiierte Lösungsmittelpolymerisation der Monomeren a.) bis f.) erhältlich, wobei das Lösungsmittel ein mit Wasser mischbares organisches Lösungsmittel ist, in dem sich sowohl die Monomeren a.) bis f.) als auch das entstandene Copolymere lösen. Bevorzugt wird Isopropanol eingesetzt. Die Lösungsmittelpolymerisation wird in einem Reaktor, in den bei Raumtemperatur die Monomeren a.) bis f.) eingetragen werden, durchgeführt. Die Monomerenmischung wird in den Beispielen mit einer Rührerdrehzahl von 120 bis 160 U/Min gerührt und etwa 10 Min. unter Inertgas weitergerührt. Anschließend gibt man den in Isopropanol aufgeschlämmten Radikalinitiator hinzu. Die Reaktionstemperatur wird innerhalb von 20 Min. auf ca. 80 Grad C eingestellt, und daraufhin die Zufuhr an Inertgas unterbrochen. Nach etwa 70 Min. wird die Polymerisation beendet. Die Neutralisation mit der Säure wird vorteilhafterweise unmittelbar nach Beendigung der Polymerisation durchgeführt. Das so entstandene Salz des Copolymeren kann dann durch Zugabe von demineralisiertem Wasser in eine kolloidale Lösung übergeführt werden.

Die neue kationische Leimungsmitteldispersion, enthält das Dispergiermittel und ein Leimungsmittel und gegebenenfalls Aluminiumsulfat. Als Leimungmittel gemäß Erfindung ist sowohl ein Reaktivleimungsmittel vom Typ Alkylketendimer, als auch ein Kolophoniumharz-oder derivat zu verstehen. Als bekannte Kolophoniumharze werden vor allem Naturharze wie Balsamkolophonium, Wurzelharz und Tallharz eingesetzt, und als Kolophoniumderivate die mit Maleinsäureanhydrid und/oder Fumarsäure modifizierten Naturharze. Die Kolophoniumderivate, auch verstärkte Harze genannt, können auch mit nichtverstärkten Harzen vermischt sein. Es können auch Kolophoniumderivate, die bei der Veresterung von Kolophonium mit Polyalkoholen , wie Glycerin und Pentaerythrit entstehen, verwendet werden.

In besonderer Weise kann die neue Leimungsmitteldispersion auch mit Aluminiumsalzen kombiniert werden. Überraschenderweise kommt es hier, nicht zur Ausflockungen bzw. Ausfällungen, wenn man Aluminiumsalze zu der fertigen Dispersion zugibt. Erfindungsgemäß werden feste oder gelöste Aluminiumsalze der fertigen Dispersion unter langsamen Rühren zugegeben. Die Menge an Aluminiumsalzen, die fester oder in gelöster Form der Leimungsmitteldispersion zugegeben wird, beträgt 0 bis 15 Gew. %, bevorzugt 5 bis 10 Gew. % bezogen auf die fertige Dispersion.

Geeignete Aluminiumsalze gemäß Erfindung sind z.B. Aluminiumsulfat, Aluminiumformiat, Aluminiumchlorid ferner auch Polyaluminiumchlorid und andere basische Aluminiumsalze.

Die erfindungsgemäßen Leimungsmitteldispersionen lassen sich vorteilhafterweise durch das Invertverfahren herstellen und zwar derart, daß das polaymere Dispergiermittel, im selben Reaktor, in dem es hergestellt worden ist, unmittelbar mit dem entsprechenden Leimungsmittel umgesetzt wird. Eine Lösung oder eine Schmelze, z. B. des Kolophoniums, wird erfindungsgemäß unter intensivem Rühren zu der alkoholischen Lösung des Dispergiermittels bei erhöhter Temperatur zugegeben, insbesondere bei 75 bis 85 Grad C. Es bildet sich eine homogene Mischung, die durch langsame Zugabe von 75 bis 85 Grad C warmen Wasser in eine Öl-in-Wasser Emulsion umgewandelt wird. Zu der so hergestellten Emulsion können gegebenenfalls in Wasser gelöste oder feste Aluminiumsalze zugegeben werden. Das Gewichtsverhältnis Dispergiermittel zum Leimungsmittel beträgt 1 zu 1 bis 20, insbesondere 1 zu 7 bis 12.

Die so hergestellte und z. B. Aluminiumsulfat enthaltende Leimungsmitteldispersion ist sofort in der Papierleimung einsetzbar. Eine separate Zugabe von Aluminiumsulfat ist nicht mehr erforderlich.

Die Dispergierwirkung des neuen kationischen Dispersionsmittels auf Kolophonium und Alkylketendimer, sowie seine Verträglichkeit mit Aluminiumsalzen war aus dem Stand der Technik nicht herleitbar und daher umso überraschender.

Bei der sog. Phasenumkehremulgierung erfolgt ein spontaner Viskositätsabfall. Nach der Abkühlung der Öl-in Wasser Emulsion liegt eine weiße, dünnflüssige Dispersion vor. Ihre durchschnittliche Teichengröße beträgt kleiner als 0,5 Mikrometer.

Nach einer anderen Verfahrensweise kann die kationische Leimungsmitteldispersion hergestellt werden und zwar derart, daß das Dispergiermittel in Form einer kolloidalen, wäßrigen Lösung dem Leimungsmittel, das als Schmelze oder als Lösung vorliegt,zugesetzt wird, und durch anschließende Zugabe von demineralisiertem Wasser unter Rühren in eine Öl-in-Wasser Emulsion übergeführt und dabei dispergiert wird und zu der so hergestellten Leimungsmitteldispersion feste oder gelöste Aluminiumsalze zugegeben werden. So entsteht eine stabile Leimungsmitteldispersion aus der das organische Lösungsmittel unter vermindertem Druck abdestilliert werden kann.

Auch bei dieser Verfahrensvariante beträgt das Verhältnis von Dispergiermittel zum Leimungsmittel 1 zu 1 bis 20, insbesondere 1 zu 7 bis 12.

In den nachstehenden Beispielen wird zunächst die Herstellung des neuen kationischen Dispergiermittels gezeigt und anschließend die Herstellung der erfindungsgemäßen Leimungsmitteldispersionen und ihre Verwendung in der Papierleimung.

**Beispiel 1**

Als Reaktionsgefäß dient ein extern beheizbarer Doppelmantelkolben mit einem Fassungsvermögen von 500 ml, der mit Rührer, Rückflußkühler, Thermometer, Gaseinlaß, Blasenzähler und Tropftrichter mit Gasausgleich ausgestattet ist. Im Kolben werden bei Raumtemperatur nacheinander vorgelegt:

20,0 g Isopropanol
32,0 g Methacrylsäuremethylester (0,32 Mol)
16,5 g Methacrylsäureester eines C 16-C 18-Fettalkohols (0,05 Mol)
15,7 g N,N-Dimethylaminoethylmethycrylat (0,01 Mol) sowie
2,5 g Acrylsäure (0,035 Mol).

Die homogene Mischung wird bei einer Rührerdrehzahl von 150 U/Min. gerührt und 10 Minuten mit einem Inertgas, z.B. Stickstoff, gespült.

Danach werden 0,25 g Azobisisobutyronitril, aufgeschlämmt in 5 g Isopropanol, zugefügt. Man heizt innerhalb 20 Minuten auf 80 Grad C auf,und stellt die Stickstoffzufuhr nach Erreichen der Temperatur ab. Die Copolymerisation der Monomeren setzt ein und erreicht nach ca. 70 Minuten den gewünschten Polymerisationsgrad; (K Wert = 12 in Dimethylformamid, bei 25 Grad C und 1,0 g pro 100 ml)

Es wird mit 10 g 98%iger Ameisensäure neutralisiert.

Das Polymersalz kann durch Zugabe von 315 g heißem, demineralisiertem Wasser innerhalb von 10 Minuten dispergiert werden. Die Wassertemperatur liegt bei 80 Grad C.

Wurde es mit Wasser dispergiert so entsteht eine nahezu farblose, schwach opaleszierende kolloidale Lösung mit einem Feststoffgehalt von 16.0 Gew.% Die Viskosität der Lösung gemessen nach Brookfield mit Spindel H 1, Drehzahl 50 U/Min, beträgt 15 m Pa s. Der Gehalt an neutralisiertem Stickstoff beträgt 150 mMol pro 100 g Copolymer.

**Beispiel 2**

Es wird Verfahren wie in Beispiel 1, jedoch werden zur Neutralisation anstatt Ameisensäure 10,25 g 32 %ige Salzsäure eingesetzt (0,09 Mol). Es entsteht eine helle, schwach opaleszierende Lösung mit einer Viskosität von 20 m Pa s. Der pH-Wert dieser Polymerlösung beträgt 4.0.

In den nachfolgend tabellarisch aufgeführten Beispielen 3 bis 5 sind weitere Copolymerzusammensetzungen angegeben, die nach der im Beispiel 1 beschriebenen Methode hergestellt worden sind.

EP 0 406 461 B1

Tabelle 1

| Beispiel | 3 | 4 | 5 |
|---|---|---|---|
| Komponente | Einsatzmengen in g | | |
| Isopropanol | 25 | 20 | 20 |
| Methylmethacrylat | 25,1 | 28 | 32 |
| C12-C14-Methacrylat | 57,6 | - | - |
| C16-C18-Methacrylat | - | 18,5 | 16,5 |
| N,N-Dimethylaminoethylmethacrylat | 21,5 | 18 | 15,7 |
| Acrylsäure | 10,8 | - | 2,5 |
| Methacrylsäure | - | 7,0 | - |
| Azodiisobutyronitril | 0,30 | 0,25 | 0,25 |
| Ameisensäure | 17,0- | - | 4,6 |
| Salzsäure 32 % | - | 11,8 | - |
| Wasser dem. | 585 | 294 | 325 |
| Feststoffgehalt (Gew.%) | 16 | 18 | 16 |
| mMol N/100 g Copolymer | 135 | 160 | 150 |
| Aussehen | schwach trübe | hell klar | schwach trübe |
| Viskosität (mPa.s) | 45 | 10 | 20 |

Die Beispiele 6 und 7 zeigen die anwendungstechnischen Vorteile, die erzielt werden, wenn man das Copolymere als Leimungsmittel allein einsetzt.

Zu den dabei verwendeten Meßgrößen werden nachstehende Erläuterungen gegeben:

1) Der Leimungsgrad wird gegen Tinte mit dem Leimungsgradprüfer Typ PLG e der Fa. Schröder, Weinheim, entsprechend der Bedienungsanleitung bestimmt. Gemessen wird die Zeit in Sekunden , die bis zum Remissionsabfall auf 80 bzw. 50 % des Remissionswertes vom zu prüfenden Papier nach dem Kontakt mit der Prüftinte vergeht.

Prüftinte: Papier-Prüftinte, blau, nach DIN 53126.

2) Cobb-Wert nach DIN 53132

Angegeben wird hierbei die Wasseraufnahme des Papiers oder Kartons in g pro qm nach dem Kontakt mit destilliertem Wasser nach einer bestimmten Zeit (1 Minute, 5 Minuten oder 30 Minuten ). Die Leimungswirkung ist umso besser, je niedriger der Cobb-Wert ist.

**Beispiel 6**

Ein ungeleimtes Rohpapier, hergestellt aus 100 Gew.% gebleichtem Nadelholz -Sulfatzellstoff, mit einem Flächengewicht von 50 g/qm wird in einer Laborleimpresse der Fa. Einlehner mit einer Leimflotte imprägniert, die 5 % enzymatisch abgebaute Weizenstärke und pro Liter dieser Stärkelösung 8 g Leimungsmittel, hergestellt nach den Beispielen 1 oder 3, enthält. Das Papier wird anschließend auf einem Phototrockner Typ 64/60 J der Fa. Gerster,Bruchsal) 2 Minuten lang bei 100 Grad C getrocknet.Die Aufnahme des Papiers an Trockensubstanz in der Leimpresse beträgt 4,5 Gew.%.

Unter gleichen Bedingungen wird eine Oberflächenleimung mit einer Leimungsflotte, die ein handelsübliches Leimungsmittel auf Basis eines Copolymeren aus Styrol, Butylacrylat und Vinylimidazol mit einem Feststoffgehalt von 20,5 Gew.% enthält, durchgeführt.

Die am Papier gemessenen Eigenschaften sind in Tabelle 2 zusammengefaßt.

Tabelle 2

| | Handelsprodukt 20,5 5ig | Polymerlösung nach Erfindung (16 %ig) | |
|---|---|---|---|
| | | Beisp.1 | Beisp.3 |
| Leimungsgrad(s) | 154 | 804 | 1150 |
| Cobb-Wert Wasser 1 Min. | 29 | 25 | 21 |

5

Die Zusammenstellung zeigt die verbesserte Leimungswirkung der erfindungsgemäßen Produkte. Erwähnenswert ist an dieser Stelle weiterhin, daß die verbesserte Leimungswirkung bei kleinerem Wirkstoffanteil eintritt.

**Beispiel 7**

Ein Filterkarton nach DIN 53106 der Fa. Macherey und Nagel /Düren mit einem Flächengewicht von 270 g/qm wird mit einer Leimflotte imprägniert, die 5 % enzymatisch abgebaute Weizenstärke und mit 0,06, 0,08 bzw. 0,1 Gew.% atro an Polymerlösung, hergestellt nach Beispiel 1 oder 5, enthält. Die Temperatur der Leimflotte beträgt 60 Grad C. Als Vergleich dient das im Beispiel 6, Tab. 2 genannte Leimungsmittel auf Basis eines Copolymeren aus Styrol, Butylacrylat und Vinylimidazol. Der Imprägnierungsvorgang erfolgt auf folgende Weise: Der auf DIN A4 - Format geschnittene Karton wird in einer 1,5 l fassenden Photoschale für 10 Sekunden mit der Leimflotte getränkt, danach zwischen Filterkarton mit einer Hartgummiwalze abgepreßt und anschließend auf einem Phototrockner der Fa. Gerster/Bruchsal 4 Minuten lang bei 100 Grad C getrocknet. Die Gewichtsaufnahme des Kartons beträgt dabei 5,7 % (Stärke + Polymerlösung). An dem so geleimten Karton werden folgende Werte gemessen, die in der Tabelle 3 demonstriert sind:

Tabelle 3

| | Handelsprodukt | | | Polymerlösung gemäß Erfindung | | | | | |
| --- | --- | --- | --- | --- | --- | --- | --- | --- | --- |
| | | | | Beisp.1 | | | Beisp.5 | | |
| Einsatzmenge % atro | 0,06 | 0,08 | 0,1 | 0,06 | 0,08 | 0,1 | 0,06 | 0,08 | 0,1 |
| Cobb-Wert (Einwirkzeit d.) (Wassers:30 Min.) | 320 | 94 | 92 | 108 | 95 | 87 | 100 | 90 | 83 |

**Beispiel 8**

Die Copolymerisation wird wie im Beispiel 1 durchgeführt . Es werden nacheinander vorgelegt:
125,6 g Isopropanol
50,8 g N,N'-Dimethylaminoethylacrylat
67,0 g Methylmethacrylat
46,0 g Methacrylester eines $C_{16}$ - $C_{18}$ - Fettalkohols
5,8 g Acrylsäure und
0,6 g Azobisisobutyronitril
Die Temperatur liegt bei der Polymerisation bei 82 Grad C und die Reaktionszeit beträgt 90 Minuten. Die Viskosität der Lösung liegt nach Beendigung der Polymerisation bei 6000 m Pa s.

Neutralisiert wird mit 26,2 g einer 98%iger Ameisensäure. Anschließend wird das gebildete Copolymersalz mit 678 g Wasser, das demineralisiert ist und eine Temperatur von 80 Grad C aufweist, innerhalb von 15 Minuten versetzt. Es entsteht eine homogene kolloidale Lösung mit einem Feststoffgehalt von 16,8 Gew. %. Die Viskosität der Lösung, gemessen nach Brookfield mit Spindel H 1, Drehzahl 50 U/Min., beträgt 260 m Pa s. und die Dichte der Lösung 1,02 $g/cm^3$.

In den weiteren Beispielen wird die Herstellung der erfindungsgemäßen Dispersionen beschrieben und ihre anwendungstechnischen Vorteile aufgezeigt.

**Beispiel 9**

Als Reaktor wird der im Beispiel 1 beschriebene Behälter eingesetzt. In das Gefäß werden 250 g aufgeschmolzenes Balsamkolophonium eingetragen und darin auf 100 Grad C erhitzt. Unter Rühren werden in einem Zeitraum von maximal 10 Minuten 170 g des im Beispiel 8 hergestellten kolloidalen Dispergiermittels in das erhitzte Balsamkolophonium zudosiert. Es entsteht eine schwach gelb gefärbte Wasser-in-Öl Emulsion. Anschließend werden zu der Wasser-in-Öl Emulsion innerhalb von 15 Minuten 380 g demineralisiertes Wasser zugegeben. Die Drehzahl des Rührers lag hierbei ebenfalls bei 600 bis 800 Umdrehungen pro Minute. Während der Wasserzugabe erfolgte eine Phasenumkehr, es bildete sich eine Öl-in Wasser-Emulsion. Abschließend wurde die Emulsion noch mit 200 g Aluminiumsulfatlösung, die ein $Al_2O_3$ Gehalt von 8 Gew. % aufweist, versetzt.

Das Endprodukt ist eine stabile, feinteilige Dispersion, die zur Masseleimung von Papier, wie später noch gezeigt wird, im besonderen Maße geeignet ist.

Eigenschaften der erfindungsgemäßen Leimungsmitteldispersion:

| Feststoffgehalt: | 35,0 Gew. % |
|---|---|
| Viskosität: | 15 mPa x s |
| pH-Wert: | 3,0 |
| Teilchengröße: | 320 nm |

**Beispiel 10**

Als Reaktions- und Dispergiergefäß dient ein indirekt beheizbarer Doppelmantelkolben von ca. 1000 ml Inhalt, der mit Rührer, Rückflußkühler, Thermometer, Gaseinlaß und Tropftrichter ausgestattet ist. In dieses Gefäß werden bei Raumtemperatur nacheinander gegeben:

35,0 g Isopropanol

15,7 g N,N′-Dimethylaminoethylacrylat

32,0 g Methylmethacrylat

16,6 g Methacrylsäureester eines $C_{17}$ bis $C_{18}$ Fettalkohols

2,5 g Acrylsäure

Das Gemisch wird bei einer Rührerdrehzahl von ca. 150 U/Min gerührt und mit Stickstoff gespült. Danach werden 0,25 g Azobisisobutyronitril zugegeben. Man erhitzt innerhalb von 20 Minuten auf 80 Grad C. Dann wird die Stickstoffzufuhr abgestellt. Die Copolymerisation der Monomeren setzt spontan ein und erreicht nach etwa 70 Minuten den gewünschten Polymerisationsgrad. Die erhaltene Lösung wird mit 6,9 g Ameisensäure neutralisiert.

In die vorstehende Polymersalzlösung rührt man 250 g auf 90 Grad C erhitztes, im geschmolzenen Zustand vorliegendes Balsamkolophonium, sowie 20 g Isopropanol ein. Die Polymersalzlösung und das Naturharz bilden ein homogenes Gemisch. Jetzt erfolgt die langsame und kontinuierliche Zugabe von 675 g auf 80 bis 85 Grad C erhitztem und demineralisiertem Wasser. Die Wasserzugabe ist nach 20 Minuten beendet. Als Endprodukt liegt eine Öl-in-Wasser Emulsion vor. Bei der Wasserzugabe stellt man zunächst einen Viskositätsanstieg fest. Die primär entstehende Wasser-in-Öl Emulsion wandelt sich nach Zugabe von etwa zwei Dritteln der vorgesehenen Wassermenge in eine Öl-in-Wasser Emulsion um. Im Umwandlungspunkt ist ein spontaner Viskositätsabfall zu beobachten. Dabei ist es zweckmäßig, daß die Rührerdrehzahl jeweils der Viskositätsänderung angepaßt wird. Nach Beendigung der Wasserzugabe wird in einem Zeitraum von 20 Minuten auf Raumtemperatur abgekühlt.

Es entsteht eine weiße, dünnflüssige Dispersion des Kolophoniums, mit einer mittleren Partikelgröße von 300 nm und einem Gesamtfeststoffgehalt bei 30,2 Gew. % und einem pH-Wert von 5.0 der Viskosität bei 28 mPa s.

Nach einer besonderen Verfahrensvariante kann nach erfolgter Phasenumkehr ein Teil der Restwassermenge auch durch Lösungen von Salzen, Polyelektrolyten und anderen Stoffen ausgetauscht werden. Art und Menge der Austauschflüssigkeit wird dabei jeweils auf die gewünschte Wirkung abgestimmt. So kann z.B. bei Kolophoniumdispersionen die Restwassermenge durch Aluminiumsulfatlösung oder bei Ketendimerdispersionen durch kationische Polyelektrolytlösung ausgetauscht werden.

Die nachstehende Tabelle 4 enthält die Beispiele 10 bis 17, welche den Gegenstand der Erfindung noch näher erläutern.

TABELLE 4

| Beispiel | 10 | 11 | 12 | 13 | 14 | 15 | 16 | 17 |
|---|---|---|---|---|---|---|---|---|
| Komponente | [g] | [g] | [g] | [g] | [g] | [g] | [g] | [g] |
| Isopropanol | 70 | 55 | 13,5 | 27 | 30 | 55 | 27 | 45 |
| N,N'Dimethylaminoethylacrylat | 16 | 20,4 | 8,1 | 9,1 | 16,3 | 15,7 | 10,2 | 15,7 |
| Acrylsäure | 2,5 | 2,5 | 0,9 | 1,2 | 2,1 | 2,5 | 1,3 | 2,5 |
| $C_{16}$-$C_{18}$ Methacrylat | 16,5 | 16,5 | 7,3 | 8 | 13,2 | 16,5 | 8,3 | 16,5 |
| Methylmethacrylat | 32 | 32 | 10,7 | 15,4 | 25,6 | 32 | 16 | 32 |
| Azobisisobutyronitril | 0,25 | 0,25 | 0,10 | 0,12 | 0,20 | 0,25 | 0,12 | 0,25 |
| Salzsäure 98 %ig | 11,4 | | | | 8,9 | 11,4 | | 8,6 |
| Ameisensäure 98 %ig | | 9 | 3,5 | 4 | | | 4,5 | |
| demineral. Wasser | 1030 | 600 | 618 | 591 | 640 | 314 | 545 | 1033 |
| Kolophonium (Balsamharz) | 300 | 250 | 250 | 250 | | | 250 | |
| Kolophoniumester (Glycerinester eines Balsamharzes mit einer Säurezahl von 8) | | | | | 160 | | | |
| Stearylketendimer | | | | | | 120 | | 200 |
| Aluminiumsulfatlösung mit 8 % Al2O3) | | 300 | | | | | 300 | |
| Feststoffgehalt in Gew.% | 25 | 32,5 | 30,8 | 31,8 | 24,2 | 33 | 31,5 | 20 |
| pH-Wert | 3 | 3 | 3,4 | 3,4 | 2,8 | 2,9 | 2,8 | 3,2 |
| Teilchengröße in nm | 220 | 170 | 340 | 370 | 190 | 320 | 320 | 440 |
| Viskosität in mPa·s | 5 | 10 | 10 | 8 | 5 | 25 | 12 | 18 |

**Beispiel 18**

Auf einer Kämmerer-Versuchspapiermaschine wurde ein Karton gefertigt aus 100 % Altpapier (50% Tageszeitung und 50 % Kaufhausabfälle) mit einem Flächengewicht von 200 g/qm. Die Stoffdichte betrug 1,2 Gew.%. Die Verdünnung der Suspension vor dem Stoffauflauf auf 0,48 % erfolgte mit Siebrückwasser. Der Suspension wurden in der Maschinenbütte 0,35 % (bezogen auf Trockensubstanz Altpapier) einer kationischen Massestärke (Hi-cat 110 [R] der Fa. Roquette) zugesetzt. Die Leimungsmittel wurden dem Stoffstrom kontinuierlich zudosiert. Der pH-Wert des Systems wurde im Stoffauflauf gemessen. Die Stofftemperatur betrug am Stoffauflauf ca. 35 Grad C. Die der getrockneten Papierbahn mit einer Restfeuchte von 4 bis 5 % entnommenen Prüfmuster wurden nach 24stündiger Klimatisierung bei 23 Grad C und 55 % relativer Luftfeuchtigkeit auf ihren Leimungsgrad untersucht. Art und Menge der zudosierten Hilfsmittel sowie die resultierenden Leimungwerte sind in Tabelle 5 aufgeführt.

TABELLE 5

| Leimungsmittel | nach Beisp. 10 | | | | nach Beisp. 8 | | | | Vergleichsbeispiel 1* nach DE-OS 37 37 615 | | | | Handelsprodukt (*2 wie im Bsp. 18 | | | |
|---|---|---|---|---|---|---|---|---|---|---|---|---|---|---|---|---|
| Eintrag, Gew.% atro | 0,5 | 0,5 | 0,75 | 0,75 | 0,5 | 0,5 | 0,75 | 0,75 | 0,5 | 0,5 | 0,75 | 0,75 | 0,5 | 0,5 | 0,75 | 0,75 |
| Retentionsmittel (*3 | 0,02 | 0,02 | 0,02 | 0,02 | 0,02 | 0,02 | 0,02 | 0,02 | 0,02 | 0,02 | 0,02 | 0,02 | 0,5 | 0,5 | 0,75 | 0,75 |
| Aluminiumsulfat [Gew. %] (*4 | - | 0,03 | - | 0,3 | - | 0,3 | - | 0,3 | - | 0,3 | - | 0,3 | - | 0,3 | - | 0,3 |
| pH Wert (Stoffauftrag) | 7,6 | 7,4 | 7,6 | 7,3 | 7,4 | 7,2 | 7,2 | 7,0 | 7,6 | 7,4 | 7,6 | 7,4 | 7,6 | 7,4 | 7,5 | 7,3 |
| Cobb Wert Wasser 60 sec | 170 | 125 | 120 | 95 | 92 | 83 | 58 | 46 | 260 | 190 | 210 | 145 | 260 | 250 | 260 | 220 |

Erläuterungen:

1) nach Beispiel 18 der DE OS 37 37 615
2) handelsübliche Kolophoniumdispersion mit Casein als Schutzkolloid
3) kationisches Polyacrylamid, Type 4632 SC von der Fa. Nalco
4) Handelsware mit 17-18 % $Al_2O_3$

**Beispiel 19**

In gleicher Weise wie im Beispiel 18 beschrieben wird ein Papier gefertigt mit folgender Zusammensetzung:
40 Gew. % Kiefersulfatzellstoff
40 Gew. % Buchensulfitzellstoff
20 Gew. % Calciumcarbonat, Type DX 1, Fa. Omya GmbH

Die Herstellbedingungen waren:

Konzentration der Feststoffe in der Maschinenbütte: 1,2 %
Konzentration der Feststoffe im Stoffauflauf: 0,28 %
Flächengewicht: 80 g/qm
Stofftemperatur: 35 Grad C

Art und Menge der zudosierten Hilfsmittel sowie die resultierenden Leimungswerte sind in der Tabelle 6 aufgeführt.

TABELLE 6

| Leimungsmittel | nach Beispiel 10 | nach Beispiel 13 | Beispiel 18 der DE-OS 37 37 615 | Handelsprodukt wie Bsp. 18 |
|---|---|---|---|---|
| Eintrag Gew. % atro | 0,6  0,6  0,75  0,75 | 0,6  0,6  0,75  0,75 | 0,6  0,6  0,75  0,75 | 0,6  0,6  0,75  0,75 |
| Stärke % | 0,3  0,3  0,3 | 0,3  0,3  0,3 | 0,3  0,3  0,3 | 0,3  0,3  0,3 |
| Retentionsmittel % | 0,015  0,015  0,015  0,015 | 0,015  0,015  0,015  0,015 | 0,015  0,015  0,015  0,015 | 0,015  0,015  0,015  0,015 |
| kat. Polyacrylamid | | | | |
| Aluminiumsulfat [Gew.%] 17 -18 % $Al_2O_3$ | -  0,4  -  0,4 | -  0,4  -  0,4 | -  0,4  -  0,4 | -  0,4  -  0,4 |
| pH-Wert | 7,3  7,1  7,2  7,0 | 7,3  7,1  7,2  7,0 | 7,5  7,3  7,5  7,3 | 7,5  7,3  7,5  7,3 |
| Cobb Wert 60 sec | 36  31  28  23 | 38  32  27  23 | 115  95  115  86 | 120  115  120  100 |
| Leimungsgrad Tinte, sec | 210  405  450  600 | 200  320  470  580 | 1  10  2  25 | 0  1  0  6 |

## Beispiel 20

Unter sonst gleichen Bedingungen wie im Beispiel 19 wurde ein Papier hergestellt, jedoch wurden als Leimungsmittel erfindungsgemäße Ketendimerdispersionen eingesetzt. Art und Menge der zudosierten Hilfsmittel sowie die resultierenden Leimungswerte sind in der Tabelle 7 zusammengestellt.

10

**Tabelle 7**

Die weiter aufgeführten Hilfsmittel entsprechen denen der Tabelle 6

| Leimungsmittel | nach Beispiel 15 | | nach Beispiel 17 | | Handelsprodukt (+) | |
|---|---|---|---|---|---|---|
| Eintrag, % atro | 0,15 | 0,20 | 0,15 | 0,20 | 0,15 | 0,20 |
| Stärke, % | 0,35 | 0,35 | 0,35 | 0,35 | 0,35 | 0,35 |
| Retentions-mittel, % | 0,02 | 0,02 | 0,02 | 0,02 | 0,02 | 0,02 |
| Füllstoffgehalt im Papier, % | 17,4 | 17,0 | 17,3 | 16,9 | 17,3 | 17,0 |
| Cobb-Wert A (§) | 29 | 24 | 31 | 25 | 47 | 38 |
| Cobb-Wert B (§) | 21 | 19 | 22 | 19 | 23 | 19 |
| Leimungsgrad A 80 % Remission | 720 | 980 | 640 | 940 | 200 | 280 |
| Leimungsgrad B 80% Remission | 2400 | 3300 | 1800 | 2950 | 2050 | 3000 |

(+) Handelsübliche Ware mit 6 % Ketendimeranteil, Gesamtfeststoff incl.

Emulgierhilfsmittel (Stärke, Tensid) 7,2 Gew.%

(§) Prüfergebnis A) bedeutet unmittelbar nach Herstellung des Papiers.

Ergebnis B) wurde nach 96stündiger Klimatisierung bei 23 Grad C und 55 % relativer Luftfeuchtigkeit ermittelt.

Aus den in obiger Tabelle aufgeführten Ergebnissen ist deutlich ersichtlich, daß mit den erfindungsgemäßen Leimungsmitteln eine wesentlich verbesserte Sofortleimung erzielt wird. Dadurch steht das hergestellte Papier nach verkürzter Lagerzeit zur Weiterverarbeitung zur Verfügung, wodurch ein bedeutsamer wirtschaftlicher Vorteil erreicht wird.

**Patentansprüche**

1. Kationisches Dispergiermittel in Form eines wässrigen, kolloidalen Polymersalzes, erhältlich durch die Umsetzung der Monomeren a bis f:
    a.) 10 bis 30 Gew. % N, N'-Dimethylaminoethylacrylat und/oder -methylacrylat
    b.) 5 bis 30 Gew. % Methacrylsäureester und/oder Acrylsäureester eines $C_{10}$ bis $C_{22}$ Fettalkohols
    c.) 10 bis 60 Gew.% Methylacrylat und/oder -methacrylat
    d.) 0 bis 60 Gew. % n-Butylacrylat und/oder -methacrylat
    e.) 0 bis 60 Gew. % i-Butylacrylat und/oder -methacrylat

f.) 3 bis 15 Gew. % Methacrylsäure und/oder Acrylsäure

2. Kationisches Dispergiermittel erhältlich durch die Umsetzung der Monomeren a bis f:
   a.) 10 bis 30 Gew. % N, N'-Dimethylaminoethylacrylat und/oder -methylacrylat
   b.) 5 bis 30 Gew. % Methacrylsäureester und/oder Acrylsäureester eines $C_{10}$ bis $C_{22}$ Fettalkohols
   c.) 10 bis 60 Gew.% Methylacrylat und/oder -methacrylat
   d.) 0 bis 60 Gew. % n-Butylacrylat und/oder -methacrylat
   e.) 0 bis 60 Gew. % i-Butylacrylat und/oder -methacrylat
   f.) 3 bis 15 Gew. % Methacrylsäure und/oder Acrylsäure
   wobei die Summe der Monomeren a.) bis f.) stets 100 % beträgt.

3. Kationisches Dispergiermittel nach den Apsprüchen 1 und 2 dadurch gekennzeichnet, daß der Stickstoffgehalt 100 bis 250 mMol pro 100 Gramm der Gewichtssumme der Monomeren a bis f beträgt.

4. Kationisches Dispergiermittel nach den Ansprüchen 1 bis 3, dadurch gekennzeichnet, daß das Copolymere das Salz einer anorganischen Säure ist, insbesondere der Salzsäure ist.

5. Kationisches Dispergiermittel nach Anspruch 1, dadurch gekennzeichnet, daß das Copolymere das Salz einer organischen Säure ist, insbesondere der Ameisensäure oder Essigsäure ist.

6. Verfahren zur Herstellung des kationischen Dispergiermittels nach Anspruch 1, dadurch gekennzeichnet, daß die Monomeren a bis f in einem mit Wasser mischbaren org. Lösungsmittel, insbesondere in Isopropanol, radikalisch polymerisiert werden und das gebildete Copolymerisat ganz oder teilweise mit einer Säure neutralisiert und durch Zugabe von Wasser kolloidal gelöst wird.

7. Verfahren zur Herstellung des kationischen Dispergiermittels nach Anspruch 2, dadurch gekennzeichnet, daß die Monomeren a bis f in einem mit Wasser mischbaren org. Lösungsmittel, insbesondere in Isopropanol, radikalisch polymerisiert werden und das gebildete Copolymerisat ganz oder teilweise mit einer Säure neutralisiert wird.

8. Kationische Leimungsmitteldispersion enthaltend das kationische Dispergiermittel nach Anspruch 1, ein Leimungsmittel vom Typ Alkylketendimer oder ein Kolophonium und/oder ein Kolophoniumderivat, sowie ein Aluminiumsalz in Mengen von 0 bis 15 Gew. %, bevorzugt 5 bis 10 Gew. % bezogen auf die fertige Dispersion, wobei das Gewichtsverhältnis vom Dispergiermittel zu Leimungsmittel zwischen 1 zu 1 bis 20, insbesondere 1 zu 7 bis 12

9. Kationische Leimungsmitteldispersion enthaltend das kationische Dispergiermittel nach Anspruch 2, ein Leimungsmittel vom Typ Alkylketendimer oder ein Kolophonium und/oder ein Kolophoniumderivat, sowie ein Aluminiumsalz in Mengen von 0 bis 15 Gew. %, bevorzugt 5 bis 10 Gew. % bezogen auf die fertige Dispersion, wobei das Gewichtsverhältnis vom Dispergiermittel zu Leimungsmittel zwischen 1 zu 1 bis 20, insbesondere 1 zu 7 bis 12 beträgt.

10. Verfahren zur Herstellung der kationischen Leimungsmitteldispersion nach Anspruch 8, dadurch gekennzeichnet, daß die kolloidale Lösung des Dispergiermittels mit dem Leimungsmittel, das als Schmelze oder als Lösung in einem org. Lösungsmittel vorgelegt wird, versetzt wird und durch Zugabe von demineralisiertem Wasser unter Rühren nach dem Invertverfahren in eine Öl-in-Wasser Emulsion übergeführt wird und zu der so hergestellten Dispersion gegebenenfalls in Wasser gelöstes oder festes Aluminiumsalz zugegeben wird.

11. Verfahren zur Herstellung der kationischen Leimungsmitteldispersion nach Anspruch 9, dadurch gekennzeichnet, daß die Lösung des Dispergiermittels mit der Lösung oder der Schmelze des Leimungsmittels versetzt wird und durch anschließende Zugabe von demineralisiertem Wasser unter Rühren nach dem Invertverfahren in eine Öl-in-Wasser Emulsion übergeführt und dispergiert wird und zu der so hergestellten Dispersion gegebenenfalls gelöstes oder festes Aluminiumsalz zugegeben wird und das organische Lösungsmittel gegebenenfalls abdestilliert wird.

**Claims**

1. Cationic dispersant in the form of an aqueous colloidal polymer salt which can be obtained by reacting monomers a to f:
   a.) 10 to 30 weight % of N,N'-dimethylamino-ethylacrylate and/or -methylacrylate
   b.) 5 to 30 weight % of methacrylic acid ester and/or acrylic acid ester of a $C_{10-22}$-fatty alcohol
   c.) 10 to 60 weight % of methylacrylate and/or -methacrylate
   d.) 0 to 60 weight % of n-butylacrylate and/or -methacrylate
   e.) 0 to 60 weight % of i-butylacrylate and/or -methacrylate
   f.) 3 to 15 weight % of methacrylic acid and/or acrylic acid.

2. Cationic dispersant which can be obtained by reacting monomers a to f:
   a.) 10 to 30 weight % of N,N'-dimethylamino-ethylacrylate and/or -methylacrylate
   b.) 5 to 30 weight % of methacrylic acid ester and/or acrylic acid ester of a $C_{10-22}$-fatty alcohol
   c.) 10 to 60 weight % of methylacrylate and/or -methacrylate
   d.) 0 to 60 weight % of n-butylacrylate and/or -methacrylate
   e.) 0 to 60 weight % of i-butylacrylate and/or -methacrylate
   f.) 3 to 15 weight % of methacrylic acid and/or acrylic acid
   the sum of monomers a.) to f.) always amounting to 100%.

3. Cationic dispersant according to claims 1 and 2, characterised in that the nitrogen content is 100 to 250 mMol per 100 grams of the sum of the weights of monomers a to f.

4. Cationic dispersant according to claims 1 to 3, characterised in that the copolymer is the salt of an inorganic acid, particularly hydrochloric acid.

5. Cationic dispersant according to claim 1, characterised in that the copolymer is the salt of an organic acid, particularly formic acid or acetic acid.

6. Process for preparing the cationic dispersant according to claim 1, characterised in that monomers a to f are radically polymerised in a water-miscible organic solvents particularly isopropanol, and the copolymer formed is wholly or partially neutralised with an acid and colloidally dissolved by the addition of water.

7. Process for preparing the cationic dispersant according to claim 2, characterised in that monomers a to f are radically polymerised in a water-miscible organic solvent, particularly isopropanol, and the copolymer formed is wholly or partially neutralised with an acid.

8. Cationic glue dispersion containing the cationic dispersant according to claim 1, a glue of the alkylketene dimer type or a colophony and/or a colophony derivative, and an aluminium salt in quantities of from 0 to 15 weight %, preferably 5 to 10 weight %, based on the finished dispersion, the weight ratio of dispersant to glue being from 1:1 to 1:20, more especially 1:7 to 1:12.

9. Cationic glue dispersion containing the cationic dispersant according to claim 2, a glue of the alkylketene dimer type or a colophony and/or a colophony derivative, and an aluminium salt in quantities of from 0 to 15 weight %, preferably 5 to 10 weight %, based on the finished dispersion, the weight ratio of dispersant to glue being from 1:1 to 1:20, more particularly from 1:7 to 1:12.

10. Process for preparing the cationic glue dispersion according to claim 8, characterised in that the colloidal solution of the dispersant is mixed with the glue, which is present as a melt or as a solution in an organic solvent, and by the addition of dimineralised water, with stirring, the whole is converted into an oil-in-water emulsion by the invert method, and aluminium salt optionally dissolved in water or in solid form is added to the dispersion thus produced.

11. Process for preparing the cationic glue dispersion according to claim 9, characterised in that the solution of the dispersant is mixed with the solution or melt of the glue and by the subsequent addition of demineralised water, with stirring, the whole is converted into an oil-in-water emulsion by the invert method and is dispersed, and optionally dissolved or solid aluminium salt is added to the resulting dispersion and the organic solvent is optionally distilled off.

**Revendications**

1. Agent dispersant cationique sous forme d'un sel polymère colloïdal aqueux pouvant être obtenu en faisant réagir les monomères a) à f) :
   a) 10 à 30% en poids d'acrylate de N,N'-diméthylaminoéthyle et/ou de N,N'-dimethylaminométhyle
   b) 5 à 30% en poids d'ester de l'acide méthacrylique et/ou de l'ester de l'acide acrylique d'un alcool gras en $C_{10}$ à $C_{22}$
   c) 10 à 60% en poids d'acrylate et/ou de méthacrylate de méthyle
   d) 0 à 60% en poids d'acrylate et/ou de méthacrylate de n-butyle
   e) 0 à 60% en poids d'acrylate et/ou de méthacrylate de i-butyle
   f) 3 à 15% en poids d'acide méthacrylique et/ou d'acide acrylique

2. Agent dispersant cationique pouvant être obtenu en faisant réagir les monomères a) à f) :
   a) 10 à 30% en poids d'acrylate de N,N'-diméthylaminoéthyle et/ou de N,N'-dimethylaminométhyle
   b) 5 à 30% en poids d'ester de l'acide méthacrylique et/ou de l'ester de l'acide acrylique d'un alcool gras en $C_{10}$ à $C_{22}$
   c) 10 à 60% en poids d'acrylate et/ou de méthacrylate de méthyle
   d) 0 à 60% en poids d'acrylate et/ou de méthacrylate de n-butyle
   e) 0 à 60% en poids d'acrylate et/ou de méthacrylate de i-butyle
   f) 3 à 15% en poids d'acide méthacrylique et/ou d'acide acrylique
   dans lequel la somme des monomères a) à f) est toujours égale à 100%.

3. Agent dispersant cationique selon les revendications 1 et 2, caractérisé en ce que la teneur en azote est comprise entre 100 et 250 mmoles pour 100 g du poids total des monomères a) à f).

4. Dispersant cationique selon les revendications 1 à 3, caractérisé en ce que le copolymère est le sel d'un acide inorganique et, en particulier, de l'acide chlorhydrique.

5. Agent dispersant cationique selon la revendication 1, caractérisé en ce que le copolymère est le sel d'un acide organique et, en particulier, de l'acide formique ou de l'acide acétique.

6. Procédé de préparation d'un agent dispersant cationique selon la revendication 1, caractérisé en ce que les monomères a) à f) subissent une polymérisation par radicaux dans un solvant organique miscible avec l'eau et, en particulier, dans l'isopropanol et en ce que le copolymère formé est totalement ou partiellement neutralisé par un acide et est transformé en solution colloïdale par addition d'eau.

7. Procédé de préparation de l'agent dispersant cationique selon la revendication 2, caractérisé en ce que les monomères a) à f) subissent une polymérisation par radicaux dans un solvant organique miscible avec l'eau et, en particulier, dans l'isopropanol et en ce que le copolymère formé est totalement ou partiellement neutralisé par un acide.

8. Dispersion d'agent d'encollage cationique contenant l'agent dispersant cationique selon la revendication 1, un agent d'encollage du type alkylcétène dimère ou une colophane et/ou un dérivé de la colophane ainsi qu'un sel d'aluminium en quantités de 0 à 15% en poids et, de préférence, de 5 à 10% en poids rapportées à la dispersion terminée, tandis que le rapport pondéral de l'agent dispersant à l'agent d'encollage est compris entre 1 : 1 et 1 : 20 et, en particulier, entre 1 : 7 et 1 : 12.

9. Agent d'encollage cationique contenant l'agent dispersant cationique selon la revendication 2, un agent d'encollage du type alkylcétène dimère ou une colophane et/ou un dérivé de la colophane ainsi qu'un sel d'aluminium en quantités de 0 à 15% en poids et, de préférence, de 5 à 10% en poids rapportées à la dispersion terminée, dans lequel le rapport pondéral de l'agent dispersant à l'agent d'encollage est compris entre 1 : 1 et 1 : 20 et, en particulier, entre 1 : 7 et 1 : 12.

10. Procédé de préparation de la dispersion d'agent d'encollage cationique selon la revendication 8, caractérisé en ce que la solution colloïdale de l'agent dispersant est mélangée avec l'agent d'encollage, qui est préparé sous forme d'une masse fondue ou d'une solution dans un solvant organique, et est transformée par addition d'eau déminéralisée avec agitation en une émulsion huile dans l'eau suivant le procédé à inversion et qu'un sel d'aluminium solide ou dissous dans l'eau est éventuellement ajouté à la dispersion ainsi préparée.

11. Procédé de préparation de la dispersion d'agent d'encollage cationique selon la revendication 9, caractérisé en ce que la solution de l'agent dispersant est mélangée avec la solution ou la masse fondue de l'agent d'encollage et est transformée par addition ultérieure d'eau déminéralisée avec agitation en une émulsion huile dans l'eau suivant le procédé à inversion et est mise en dispersion et qu'un sel d'aluminium solide ou dissous est éventuellement ajouté à la dispersion ainsi préparée et que le solvant organique est éventuellement éliminé par distillation.